# EUROPÄISCHE PATENTSCHRIFT

(11) **EP 1 353 963 B1**
(45) Veröffentlichungstag und Bekanntmachung des Hinweises auf die Patenterteilung: **15.06.2005**
(21) Anmeldenummer: 01270559.6
(22) Anmeldetag: 20.11.2001
(51) Int. Cl.: C08F 8/00, A61K 31/785

(54) **ALKYLIERUNG VON N-BZW. AMINO- ODER AMMONIUMGRUPPEN HALTIGEN, VERNETZTEN POLYMEREN**
ALKYLATION OF CROSS-LINKED POLYMERS CONTAINING N- OR AMINO- OR AMMONIUM GROUPS
ALKYLATION DE POLYMERES RETICULES CONTENANT DES GROUPES N OU AMINO OU AMMONIUM

(30) Priorität: 13.12.2000 AT 20712000
(43) Veröffentlichungstag der Anmeldung: 22.10.2003
(73) Patentinhaber: DSM Fine Chemicals Austria Nfg GmbH & Co KG, 4021 Linz (AT)
(72) Erfinder: STANEK, Michael, A-4020 Linz (AT); STEINWENDER, Erich, A-4040 Linz (AT)
(74) Vertreter: Lindinger, Ingrid
(86) Internationale Anmeldenummer: PCT/EP2001/013383
(87) Internationale Veröffentlichungsnummer: WO 2002/048209

(56) Entgegenhaltungen:
- EP-A- 0 523 480
- EP-A- 1 064 924
- WO-A-00/32656
- WO-A-00/63259
- WO-A-92/10522
- WO-A-95/34585

## Beschreibung

Die Erfindung betrifft ein Verfahren zur effizienten Alkylierung von N-bzw. Amino- oder Ammoniumgruppen haltigen Polymeren, die beispielsweise in der Medizin zur Senkung des Cholesterinspiegels durch Bindung der Gallensäuren bzw. von Gallensäuresalzen eingesetzt werden.

Der Begriff Alkylierung ist sehr umfassend und beinhaltet als Definition die Addition einer Alkylgruppe an ein Molekül. Alkylierungsreaktionen spielen in der chemischen Industrie eine entscheidende Rolle - insbesondere in der pharmazeutischen Chemie haben sie einen besonderen Stellenwert, da zum einen wegen des oft sehr hohen Produktpreises die Effizienz der Reaktion gewährleistet sein muss und zum anderen die bei der Reaktion entstehenden Nebenprodukte wegen der teuren Aufreinigungsschritte möglichst niedrig gehalten werden müssen.
Eine besondere Bedeutung hat die Alkylierung von Gelen und Polymeren, da hier nicht nur die, wie für homogene Lösungen, in der Literatur beschriebene Reaktionskinetik gilt, sondern vielmehr die Alkylierung verstärkt diffusionskontrollierten Bedingungen unterliegt.

Bei den bisher aus dem Stand der Technik (zB.: WO 98/43653; WO 99/33452; EP 0 909 768; WO 99/34786; WO 98/29107; WO 00/32656 u.s.w.) bekannten Verfahren zur Alkylierung von vemetzten N-bzw. Amino-, Ammonium- oder spirobicyclische Ammoniumgruppen haltigen Polymeren, wie etwa bei der Alkylierung beispielsweise von mit Epichlorhydrin vemetztem Polyallylaminhydrochlorid, entstehen während der Reaktion erhebliche Mengen an halogenhaltigen Nebenprodukten, wie beispielsweise etwa Chlordecan und/oder Chloroquat, und bei der Verwendung von Methanol als Lösungsmittel in Kombination mit wäßriger Natronlauge in vier äquivalenten Portionen Nebenprodukte, wie Methoxydecan und/oder Methoxyquat u.s.w.. Ein weiterer Nachteil bisher üblicher Alkylierungsverfahren sind die unbefriedigenden Alkylierungsausbeuten und sehr lange Reaktionszeiten. Außerdem muss der beträchtlicher Anteil an flüchtigen organischen Verunreinigungen aus den Polymeren bzw. Gelen anschließend durch mehrere Alkohol/NaCl-Wäschen oder Alkohol-Wäschen beseitigt werden.

Aufgabe der vorliegenden Erfindung war es demnach, eine Alkylierungsmethode für vemetzte, N-bzw. Amino-, Ammonium- oder spirobicyclische Ammoniumgruppen haltige Gele bzw. Polymere zu finden, die kurze Reaktionszeiten, hohe Alkylierungsausbeuten und eine möglichst geringe Bildung von Nebenprodukten gewährleistet.

Unerwarteterweise konnte diese Aufgabe durch eine Alkylierungsmethode gelöst werden, die nicht nur die optimalen Alkylierungsbedingungen während der Reaktion, sondern auch die Aufbereitung des zu alkylierenden Gels beinhaltet.

Gegenstand der Erfindung ist daher ein Verfahren zur Alkylierung von vernetzten, N-bzw. Amino-, Ammonium- oder spirobicyclische Ammoniumgruppen haltigen Polymeren, das dadurch gekennzeichnet ist, dass die durch Polymerisation und Vernetzung erhaltenen, ausgelierten Polymere
a) in Wasser, einem organischen Lösungsmittel oder in einem organischen Lösungsmittel/Wassergemisch durch Zugabe einer Base gegebenenfalls deprotoniert,
b) die Polymere gegebenenfalls 1 oder mehrmals mit Wasser, einem organischen Lösungsmittel oder einem organischen Lösungsmittel/Wassergemisch gewaschen werden, dann
c) zu der in Wasser, einem organischen Lösungsmittel oder in einem organischen Lösungsmittel/Wassergemisch aufgerührten Gelsuspension ein oder mehrere Alkylatoren bei einer Temperatur zwischen 5 und 160°C bei Normaldruck oder unter erhöhtem Druck zugegeben werden, worauf nach einer Durchmischzeit von 1 bis 60 Minuten, die kontinuierliche Zugabe der Base oder die Zugabe der Base in mehreren Portionen so erfolgt, dass der pH-Wert zwischen 8 und 13,5 liegt, und
d) anschließend die Reprotonierung mittels einer Mineralsäure, gegebenenfalls nach einem oder mehreren Waschschritten, durchgeführt wird,
wodurch die entsprechend alkylierten, vemetzten, N-bzw. Amino-, Ammonium- oder spirobicyclische Ammoniumgruppen haltigen Polymere erhalten werden.

Bei dem erfindungsgemäßen Verfahren werden vemetzte, N-bzw. Amino-, Ammonium- oder spirobicyclische Ammoniumgruppen haltige Polymere alkyliert.

Bei diesen Polymeren handelt es sich um Polymere, die beispielsweise in WO 00/32656, WO 00/38664, WO 99/33452, WO 99/22721, WO 98/43653, US 5 624 963 und US 5 496 545 beschrieben sind.
Für das erfindungsgemäße Alkylierungsverfahren eignen sich insbesondere kationische Polymere. Zu den kationischen Polymeren gehören u.a. solche Polymere, die ein Amin-N-Atom enthalten wie etwa primäre, sekundäre oder tertiäre Amingruppen oder Salze davon, quatemäre Ammoniumgruppen und/oder spirobicyclische Ammoniumgruppen enthalten. Zusätzliche kationische Gruppen beinhalten Amidino, Guanidino, Imino u.s.w.
Das kationische Polymer zeichnet sich dadurch aus, dass es beim physiologischen pH-Wert eine positive Ladung aufweist.
Beispiele für geeignete kationische Polymere beinhalten Polyvinylamine, Polyallylamine, Polydiallylamine, Polyvinylimidazole, Polydiallylalkylamine, Polyethylenimine u.s.w., sowie Polymere enthaltend die aus beispielsweise WO 00/32656, Seite 7f.; WO 98/43653, Seite 4f.; US 5,496,545, Spalte 2 bis 4; US 5,624,963; WO 98/29107 u.s.w. bekannten, sich wiederholenden Einheiten.
Die eingesetzten Polymere sind zudem vemetzt. Die Vernetzung kann dabei bereits während der Polymerisation oder aber auch erst im Anschluss an die Polymerisation durchgeführt werden. Geeignete Vemetzungsmittel beinhalten die aus dem bereits zitierten Literaturstellen bekannten Vernetzungsmittel. Beispiele dafür sind Epichlorhydrin, Succinyldichlorid, Ethylendiamin, Toluoldiisocyanat, Diacrylate, Dimethacrylate, Methylenbisacrylamide, Dichlorethan, Dichlorpropan, u.s.w.
Die für das erfindungsgemäße Verfahren eingesetzten Polymere weisen weiters negativ geladene Gegenionen auf. Diese Gegenionen können organische oder anorganische lonen oder Kombinationen davon sein. Geeignete Gegenionen beinhalten ebenfalls die aus dem bereits zitierten Stand der Technik bekannten Gegenionen. Beispiele für geeignete anorganische lonen sind Halogenide, insbesondere Chlorid, Phosphate, Phosphite, Carbonate, Bicarbonate, Sulfate, Bisulfate, Hydroxide, Nitrate, Persulfate, Sulfite und Sulfide. Beispiele für geeignete organische lonen sind Acetate, Ascorbate, Benzoate, Lactat, Fumarat, Maleat, Pyruvat, Citrate, Dihydrogencitrate, Hydrogencitrate, Propionat, Butyrat, Oxalate, Succinate, Tartrate, Cholate u.s.w..

Die Herstellung der Polymere erfolgt gemäß dem Stand der Technik, etwa wie in WO 99/33452, WO 99/22721, WO 98/43653, US 5 624 963 und US 5 496 545 beschrieben.

Im Anschluss an die Polymerisation, Vernetzung und Gelierzeit erfolgt sodann die erfindungsgemäße Alkylierung der in Gelform erhaltenen Polymere. Das zu alkylierende Gel wird gegebenenfalls vorerst noch zerkleinert bzw. geschnitten.
Noch vor der Alkylierungsreaktion wird das gegebenenfalls geschnittene Rohgel mit einem Wasser/Basengemisch, einem organischen Lösungsmittel/Basengemisch oder einem Gemisch aus organischem Lösungsmittel, Wasser und Base gewaschen, so dass das Gel vollständig oder teilweise deprotoniert vorliegt. Gegebenenfalls kann auf die Deprotonierung verzichtet werden und das gegebenenfalls geschnittene Rohgel wird dann nur mit Wasser, einem organischen Lösungsmittel oder einem Gemisch aus organischem Lösungsmittel und Wasser gewaschen. Bevorzugt wird das Polymer jedoch deprotoniert.
Schritt a) erfolgt dabei bei einer Temperatur von 1 °C bis 100 °C, bevorzugt bei 5 bis 90°C, besonders bevorzugt bei 10 bis 40°C mit Wasser, vorzugsweise mit vollentsalztem Wasser (VE-Wasser), oder einem Lösungsmittel oder einem Gemisch und einer zur Deprotonierung geeigneten Base.
Geeignete Lösungsmittel sind C₁-C₁₀Alkohole, Formamid, Dimethylformamid (DMF), Tetrahydrofuran (THF), Acetonitril, Dimethylsulfoxyd (DMSO) und Hexamethylphosphorsäuretriamid (HMPT). Es können aber auch Gemische derselben oder Gemische mit Wasser eingesetzt werden. Bevorzugt wird jedoch ein C₁-C₁₀Alkohol verwendet.
Die Alkohole können dabei linear oder verzweigt sein, wie etwa Methanol, Ethanol, i-Propanol, Butanol.
Besonders bevorzugt werden C₁-C₆-Alkohole, insbesondere Methanol, Ethanol und i-Propanol als Lösungsmittel eingesetzt.
Geeignete Basen sind Hydroxide, wie etwa NaOH, KOH, LiOH, Ca(OH)₂, NH₄OH, Carbonate, wie etwa Na₂CO₃, K₂CO₃ u.s.w.. Bevorzugt wird NaOH, KOH oder NH₄OH verwendet.

Die zu verwendende Menge an Base unterscheidet sich stark vom jeweiligen Gel, und hängt von der Menge der Gegenionen ab.
Pro mol Gegenionen werden dabei 0,1 bis 5 mol Base, bevorzugt 0,5 bis 3 mol und besonders bevorzugt 0,7 bis 2 mol Base zugesetzt. Größere Überschüsse an Base können gewünschtenfalls auch eingesetzt werden.

Durch weiteres Waschen des deprotonierten Gels (Schritt b) mit einem organischen Lösungsmittel, einem Lösungsmittelgemisch oder Wasser/organischen Lösungsmittel-Gemischen bei einer Temperatur von 1 bis 100°C kann der Gehalt an Salzen im Gel stark reduziert werden. Bevorzugt wird zum weiteren Waschen das in Schritt a) eingesetzte Lösungsmittel verwendet. Schritt b) kann gegebenenfalls entfallen, ansonsten wird das deprotonierte Gel 1 bis 8 mal gewaschen. Bevorzugt wird das Gel ein bis dreimal gewaschen. Gegebenenfalls können die Schritte a) und b) ganz entfallen.

Zu der in Wasser oder Lösungsmittel oder Lösungsmittelgemisch aufgerührten Gelsuspension werden dann die Alkylatoren zugegeben. (Schritt c)
Unter Alkylatoren sind Reaktanten zu verstehen, die, wenn sie mit einem vemetzten Polymer umgesetzt werden, bewirken, dass eine Alkylgruppe oder ein Derivat davon, wie etwa eine substituierte Alkylgruppe u.s.w., kovalent an ein oder mehrere der N-Atome im Polymer gebunden wird.
Geeignete Alkylatoren sind dabei Verbindungen der Formel RX, die eine Alkylgruppe oder ein Alkylderivat mit 1 bis 24 C-Atomen (R) aufweisen, die bzw. das an eine Abgangsgruppe (X) gebunden ist, wie sie aus dem bereits zitierten Stand der Technik bereits bekannt sind.
R ist demnach ein linearer, verzweigter oder cyclischer Alkylrest mit 1 bis 24 C-Atomen, bevorzugt mit 4 bis 20 C-Atomen, oder ein Alkylderivat, wie etwa eine C₁-C₂₀-, bevorzugt C₄-C₂₀-Hydroxyalkylgruppe, C₇-C₂₀-Aralkylgruppe, C₁-C₂₀-, bevorzugt C₄-C₂₀-Alkylammoniumgruppe oder C₁-C₂₀-, bevorzugt C₄-C₂₀-Alkylamidogruppe.
X ist eine elektrophile Abgangsgruppe, beispielsweise aus der Gruppe der Halogenide, wie etwa Chlorid, Bromid, Fluorid, Jodid oder beispielsweise eine Abgangsgruppe wie Epoxy, Tosylat, Mesylat oder Triflat. Der Alkylator kann dabei eine oder mehrere Abgangsgruppen enthalten.
Beispiele für bevorzugte Alkylatoren sind C₁-C₂₄-Alkylhalogenide, wie etwa n-Butylhalogenid, n-Hexylhalogenid, n-Decylhalogenid, n-Dodecylhalogenid, n-Tetradecylhalogenid, n-Octadecylhalogenid, u.s.w., C₁-C₂₄-Dihalogogenalkane, wie etwa 1,10-Dihalogendecan, u.s.w., C₁-C₂₄-Hydroxyalkylhalogenide, wie etwa 11-Halogen-1-undecanol, u.s.w., C₁-C₂₄-Aralkylhalogenide, wie etwa Benzylhalogenid, substituierte Benzylhalogenide, u.s.w., C₁-C₂₄-Alkylepoxyammoniumsalze, wie etwa Glycidylpropyl-trimethyl-ammoniumsalz, u.s.w., C₁-C₂₄-Epoxyalkylamide, wie etwa N-(2,3-Epoxypropan)butyramid, N-(2,3-Epoxypropan)hexanamid, u.s.w., C₁-C₂₄-Alkylhalogenid-ammoniumsalze, wie etwa (4-Halogenbutyl)-trimethylammoniumsalz, (6-Halogenhexyl)-trimethylammoniumsalz, (8-Halogenoctyl)-trimethylammoniumsalz, (10-Halogendecyl)-trimethylammoniumsalz, (12-Halogendodecyl)-trimethyl-ammoniumsalz, u.s.w..

Bevorzugte Alkylatoren sind Bromdecan und 6-Bromo-hexyl-trimethylammoniumbromid.
Bei der Alkylierungsreaktion können dabei einer oder mehrere Alkylatoren zugesetzt werden.
Die Alkylatoren werden bei dem erfindungsgemäßen Verfahren je nach gewünschtem Alkylierungsgrad eingesetzt. Die Synthese von Colesevelam Hydrochlorid soll beispielsweise eine Polymerstruktur liefern, bei der ungefähr 12 % der Amine des Polyallylamingerüstes vemetzt, ungefähr 40 % der Amine des Polyallylamingerüstes mit Decylgruppen und ungefähr 34 % der Amine des Polyallylamingerüstes mit Trimethylammonium-hexyl-gruppen versehen sind, sowie ungefähr 14 % der Amine des Polyallylamingerüstes als primäre Amine bestehen bleiben (Polymer Preprints 2000, 41(1), 735-736). Die Bestimmung der unterschiedlichen Alkylierungsgrade kann sehr einfach im Vergleich zu einer ausgewählten Referenzsubstanz durch Analyse des C/N-Verhältnisses und der Anzahl der freien Amine (titrierbare Amine) bestimmt werden. So wurde beispielsweise für die Synthese von Colesevelam Hydrochlorid entsprechend dem Stand der Technik etwa für einen Standardansatz von 187.5 g feuchtem Rohgel 0.16 (± 4 %) mol Monoquat und 0.15 (± 4 %) mol Bromdecan eingesetzt; beim erfindungsgemäßen Verfahren kann beispielsweise die Menge der Alkylatoren auf 0.1536 mol Monoquat und 0.1326 mol Bromdecan maximal reduziert werden, was einer Reduktion um 15 % Bromodecan bzw. 8 % an Monoquat entspricht. Die asymmetrische Veränderung der Alkylatoren liegt darin, dass jeder Alkylator unterschiedlichen Alkylierungsausbeuten unterliegt.

Die Zugabe der Alkylatoren erfolgt bei einer Temperatur zwischen 5 und 160°C und kann sowohl bei Normaldruck als auch bei erhöhtem Druck durchgeführt werden.
Wir bei erhöhtem Druck gearbeitet, so wird ein Überdruck von 0,1 bis 20bar, bevorzugt von 0,1 bis 5 bar und besonders bevorzugt von 0,1 bis 2 bar eingestellt.

Vor oder nach der Zugabe kann beispielsweise das im Lösungsmittel suspendierte Gel je nach Lösungsmittel auf 25 bis 160°C, bevorzugt auf 35 bis 120°C und besonders bevorzugt auf Siedetemperatur des jeweiligen Lösungsmittels erhitzt werden.
Nach Zugabe des oder der Alkylatoren wird das Reaktionsgemisch noch durchgemischt, wobei die Durchmischzeit zwischen 1 und 60 Minuten, bevorzugt 5 bis 50 Minuten und besonders bevorzugt 10 bis 40 Minuten liegt. Längere Durchmischzeiten können gewünschtenfalls auch eingehalten werden, bringen jedoch keinen zusätzlichen Vorteil.
Anschließend wird mit der kontinuierlichen oder quasi-kontinuierlichen Zugabe an Base begonnen.
Als Base eignen sich hierfür in Abhängigkeit vom verwendeten Lösungsmittel NaOH, KOH, NH₄OH, LiOH, Ca(OH)₂, Ba(OH)₂, NaH und NaNH₂. Bevorzugt wird NaOH eingesetzt.
Die Zugabe der Base erfolgt am besten so, dass der pH-Wert während der gesamten Reaktionszeit konstant bleibt. Je nach pH-Elektrode und Eichung der Elektrode kann der Wert differieren - daher wird ein optimaler pH-Bereich von 8 bis 13.5, bevorzugt 10.5 bis 11.5 angegeben. Wurde einmal die optimale Menge an Base entsprechend der Kinetik bestimmt, dann kann nach Berechnung mittels exptonentieller Ausgleichsfunktion die Basen-Zudosierung auch quasi-kontinuierlich in mehreren Portionen (mindestens 6, bevorzugt mindestens 16, besonders bevorzugt mehr als 16 Portionen) aber unterschiedlichen Zeitabständen erfolgen. Entsprechend der Ausgleichsfunktion kann eine kontinuierliche Basen-Zugabe auch polygonartig durchgeführt werden.
Ein zu hoher pH-Wert bzw. Basen-Anteil führt einerseits zur erhöhten Bildung von Alkoxy-Verunreinigungen, wie etwa Methoxydecan, Ethoxydecan, (6-Methoxyhexyl)-trimethylammoniumbromid, u.s.w., im Falle der Verwendung eines Alkohols als Lösungsmittel; ein zu niedriger pH-Wert bzw. Basen-Anteil vermindert die Reaktionsgeschwindigkeit und erhöht die Bildung von beispielsweise CI-Alkan-Verunreinigungen.
So führt beispielsweise bei der Alkylierung von vemetzten Polymeren, die Hydrochloridionen aufweisen, wie etwa Potydiallylaminhydrochlorid oder Polyallylaminhydrochlorid, unter Verwendung eines Alkylators mit X gleich Bromid nur ein ständiges Zudosieren an beispielsweise NaOH entsprechend der Kinetik bzw. entsprechend der Bildung an Bromwasserstoffsäure dazu, dass durch die noch vorhandenen Ammoniumhydrochloridionen oder das im Gel verbleibende NaCl-Salz keine Salzsäure entsteht, die dann mit den Alkylatoren zu unerwünschten Cl-Alkan-Verbindungen reagiert. Cl-Alkan-Verbindungen und Alkoxy-alkan-Verbindungen müssen nach erfolgter Reaktion aus dem Gel durch mehrmaliges Waschen beispielsweise mit Alkohol oder Alkohol/NaCl-Lösungen beseitigt werden.
Erfindungsgemäß kann im Vergleich zum Stand der Technik auf einen oder mehrere Waschschritte wegen des um bis zu 70 % geringeren Verunreinigungsprofils verzichtet werden.
Die Alkylierungsreaktion ist beendet, wenn mindestens 95 bis 99 % der Alkylatoren abreagiert sind, was erfindungsgemäß im Vergleich zum Stand der Technik um 30 bis 50 % schneller erfolgt

Nach Ende der Reaktion wird in Schritt d) das Gel in Wasser, einem organischen Lösungsmittel oder in einem organischen Lösungsmittel/Wassergemisch durch Zugabe einer Säure reprotoniert.
Geeignete organische Lösungsmittel sind dabei lineare, verzweigte oder cyclische C₁-C₁₀-Alkohole mit 1 bis 3 OH-Gruppen, wie etwa Methanol, Ethanol, Isopropanol, n-Propanol, n-Butanol, sek. Butanol, Hexanol, Ethylhexanol, Cyclopentanol, Cyclohexanol, Cyclooctanol Cyclohexandiol, Glykol, Glycerin u.s.w., sowie Ketone, wie etwa Aceton, Methylethylketon, Methylisopropylketon, Methylisobutylketon, Diisopropylketon, Cyclohexanon u.s.w., Nitrile, wie etwa Acetonitril u.s.w. und Ether, wie etwa Tetrahydrofuran, Methyltert.-butylether, Dimethoxyethan, u.s.w. Bevorzugt werden C₁-C₄-Alkohole, besonders bevorzugt wird Methanol eingesetzt.
Unter organischem Lösungsmittel sind dabei auch Gemische der oben angeführten Lösungsmittel zu verstehen.

Als Säuren für die Reprotonierung eignen sich alle Mineralsäuren und organische Säuren, die zu den bereits angeführten Gegenionen führen.
Dies sind beispielsweise HCl, HBr, H₂SO₄, H₃PO₄, HNO₃ u.s.w. sowie Ameisensäure, Essigsäure, Oxalsäure, Zitronensäure, Brenztraubensäure, Maleinsäure, Fumarsäure, Propionsäure, Weinsäure u.s.w..

Das Gel wird dabei zuerst in Wasser, dem organischen Lösungsmittel, dem Gemisch aus verschiedenen organischen Lösungsmitteln oder dem Lösungsmittel/Wassergemisch gerührt. Die Rührzeit beträgt dabei wenige Minuten bis mehrere Stunden, bevorzugt 1 bis 60 Minuten, besonders bevorzugt für 5 bis 30 Minuten. Längere Rührzeiten sind gewünschtenfalls auch möglich. Die Temperatur liegt wiederum zwischen 1 und 100 °C, bevorzugt zwischen 5 bis 90°C und besonders bevorzugt zwischen 10 bis 40°C.
Dann wird mit jener Menge an Säure versetzt, die zur vollständigen oder teilweisen Reprotonierung der Amine im Polymer führt.

Gewünschtenfalls kann die Reprotonierung des alkylierten Gels jedoch auch am Ende einer oder mehrerer Alkohol- und/oder Alkohol/Salz-, beispielsweise NaCl, - Wäschen und/oder Wasser- und oder Wasser/Salz, wie etwa NaCl-Wäschen erfolgen.
Im Falle der Verwendung von Alkylatoren, die quatemäre Ammoniumgruppen, wie zum Beispiel (6-Bromohexyl)-trimethylammonium-bromid, tragen, kann im Vergleich zum Stand der Technik ein Großteil der entsprechenden Bromidionen gegen Chloridionen durch weniger oftmaliges Waschen mit Wasser/NaCl erfolgen, da die Gesamtmenge an diversen Salzen durch Beseitigung von Hydrochloridionen vor Beginn der Alkylierungsreaktion geringer ist.
Im Anschluss an die Reprotonierung und im Falle des Bromid/Chlorid-Austausches kann überschüssiges NaCl im Gel durch mehrmaliges Waschen mit Wasser beseitigt werden. Das feuchte Gel wird entsprechend dem Stand der Technik getrocknet.

Durch das erfindungsgemäße Verfahren ist es möglich vemetzte, N-bzw. Amino-, Ammonium- oder spirobicyclische Ammoniumgruppen haltige Gele bzw. Polymere in äußerst effizienter Weise zu alkylieren, wobei kurze Reaktionszeiten, hohe Alkylierungsausbeuten und eine möglichst geringe Bildung von Nebenprodukten gewährleistet sind.
Bevorzugt wird das erfindungsgemäße Verfahren zur Alkylierung von vemetzte Polyallyl- und Polydiallylaminhydrochloriden mit N-bzw. Amino-, Ammonium- oder spirobicyclische Ammoniumgruppen haltigen funktionellen Gruppen eingesetzt.
Die Vorteile des erfindungsgemäßen Verfahrens liegen dabei insbesondere in der wesentlich geringeren Bildung von Verunreinigungen, wie Chlordecan, Methoxydecan, Chloroqat und Methoxyquat, sowie in der deutlich reduzierten Menge (bis zu 15% weniger Verbrauch) an eingesetzter, benötigter Alkylatorenmenge. Durch die geringere Bildung von Verunreinigungen sind außerdem im Vergleich zum Stand der Technik weniger Waschschritte erforderlich.
Ein weiterer Vorteil ist der höhere Durchsatz durch Reduktion der Reaktionszeit um ca. 30-50 % (von ca. 20 h, bzw. 26 h gemäß Stand der Technik auf 10-13 h).

### Beispiel 1:

### Herstellung eines mit Epichlorhydrin vemetzten Polyatlylaminhydrochlorides, Alkylierung und Waschung:

### Vernetzung:

In einem 4.5 l Schmizo wurden 1500 g (8.02 mol) einer wäßrigen 50 %igen Polyallylaminhydrochlorid-Lösung vorgelegt und mit 2037 g VE-Wasser unter Rühren und Stickstoffspülung verdünnt. Anschließend wurde bei 10 °C mit 393 g (4,92 mol) Natronlauge (50 %ig) auf einen pH-Wert zwischen 10,0 -10,4 gestellt. Die erhaltene Lösung wurde 60 Minuten gerührt und währenddessen auf 5°C Innentemperatur abgekühlt. Das Reaktionsgemisch wurde mit 44,53 g (0.48 mol) Epichlorhydrin versetzt, 30 Minuten bei 5 °C gerührt und anschließend zum Gelieren in ein Plastikgefäß abgelassen. Die Ausbeute betrug 100 % der Theorie. Nach 24 Stunden Gelierzeit wurde das Gel zwei Mal durch ein Sieb mit einer Maschenweite von 1.5 mm gedrückt.

### Deprotonierung und Waschen des geschnittenen Rohgels (Schritt a und b):

In einer Glassintemutsche (Glasfritte G2; 14 cm Ø) wurden 187.5 g geschnittenes Gel (Quader mit ca. 2 x 2 x 2 mm Kantenlänge) vorgelegt, mit 337,5 g Methanol und 15 g NaOH (50 %ig) versetzt, 20 Minuten lang unter Rühren suspendiert und anschließend nach dem Setzen lassen (ca. 15 min) bis zur Oberfläche abfiltriert. Anschließend wurde der Gelkuchen noch 3 Mal mit je 310 g Methanol versetzt, 20 Minuten lang gerührt und jeweils bis zur Oberfläche abgesaugt.

### Alkylierung (Schritt c):

Das methanolfeuchte Rohgel (375 g) wurde in einem 500 ml Schmizo vorgelegt, unter Stickstoffatmosphäre mit ca. 125 g Methanol auf ein Gesamtvolumen von 600 ml aufgefüllt und auf 50 °C aufgeheizt. Anschließend wurden 46.9 g (0.155 mol) (6-Bromohexyl)-trimethylammoniumbromid in 25 g Methanol und 31.0 g (0.14 mol) 1-Bromdecan unter Rühren zur erhitzten Gelsuspension gegeben. Nach erfolgter Zugabe der Alkylatoren wurde die Reaktionslösung 8 Stunden unter Rückfluß gerührt. Ab dem Zeitpunkt des Rückflussierens wurden entsprechend der untenstehenden Tabelle 23 g Natronlauge (50 %ig) entweder diskontinuierlich nach unterschiedlichen Zeitabstandänden aber gleichen Portionen (A), oder kontinuierlich in gleichen Zeitintervallen aber unterschiedlichen Portionen (B), oder kontinuierlich nach unterschiedlichen Zeitintervallen aber gleichen Portionen (C) zugegeben.

| **diskontinuierlich (A)** | | **kontinuierlich (B)** | | **kontinuierlich (C)** | |
|---|---|---|---|---|---|
| **Zeitabstände für nächste NaOH- Dosierung** | **NaOH 50 %ig [g]** | **Zeitintervall für NaOH- Dosierung** | **NaOH 50 %ig [g]** | **Zeitintervall für NaOH- Dosierung** | **NaOH 50 %ig [g]** |
| 0 min | 1,44 | 30 min | 4,17 | 13 min | 1,44 |
| 14 min | 1,44 | 30 min | 3,45 | 13 min | 1,44 |
| 14 min | 1,44 | 30 min | 2,86 | 13 min | 1,44 |
| 14 min | 1,44 | 30 min | 2,36 | 13 min | 1,44 |
| 14 min | 1,44 | 30 min | 1,96 | 14 min | 1,44 |
| 14 min | 1,44 | 30 min | 1,62 | 16 min | 1,44 |
| 16 min | 1,44 | 30 min | 1,34 | 18 min | 1,44 |
| 18 min | 1,44 | 30 min | 1,11 | 20 min | 1,44 |
| 20 min | 1,44 | 30 min | 0,92 | 25 min | 1,44 |
| 25 min | 1,44 | 30 min | 0,76 | 27 min | 1,44 |
| 27 min | 1,44 | 30 min | 0,63 | 29 min | 1,44 |
| 29 min | 1,44 | 30 min | 0,52 | 34 min | 1,44 |
| 34 min | 1,44 | 30 min | 0,43 | 45 min | 1,44 |
| 45 min | 1,44 | 30 min | 0,36 | 60 min | 1,44 |
| 65 min | 1,44 | 30 min | 0,30 | 70 min | 1,44 |
| 90 min | 1,44 | 30 min | 0,24 | 70 min | 1,44 |

Nach erfolgter Zugabe der Natronlauge wurde der Rührer ausgeschaltet und die Gelsuspension noch weitere 2 Stunden rückflussiert.

### Reprotonierung (Schritt d)

Anschließend wurde auf 20 °C abgekühlt und die Gelsuspension unter Rühren (20 Minuten) mit 34.2 g konzentrierter Salzsäure (36 %ig) versetzt.

### Waschen des alkylierten Gels:

Die erhaltene Gelsuspension wurde 4 Mal unter Rühren mit je 225 g Methanol und 34,2 g 2 molare NaCI-Lösung versetzt und nach 20 minütiger Rührzeit bis zur Oberfläche abfiltriert. Anschließend wurde der Gelkuchen 6 Mal mit je 525 g 2 molarer NaCl-Lösung und 6 Mal mit je 490 ml entionisiertem Wasser gewaschen.
Der erhaltene Gelkuchen wurde bei 60 °C und 20 mbar Vakuum bis zu einem Trockenverlust von maximal 3 % getrocknet. Es wurden 75.4 g Produkt mit einem Trockensubstanzgehalt von 1.4 % erhalten.

Im Vergleich zum Stand der Technik kann nach Ende der Alkylierungsreaktion in der Reaktionslösung der Gehalt an organischen Verunreinigungen verringert werden:

| | **Chlordecan** | **Methoxydecan** | **Chloroquat** | **Methoxyquat** |
|---|---|---|---|---|
| **Stand der Technik** | **3 - 4 g/l** | **1,8 - 2,2 g/l** | **5 - 6 g/l** | **5 - 7 g/l** |
| **erfindungsgemäß** | **0,5 - 0,8 g/l** | **0,9 - 1,4 g/l** | **1,8 - 2,8 g/l** | **5 - 7 g/l** |

Der Gehalt an Chlordecan im feuchten Gel ist im Vergleich zum Stand der Technik nach der vierten Methanol/NaCl-Wäsche nur mehr 600 bis 800 ppm statt 2500 bis 3000 ppm.

Ein Vergleichsbeispiel zur Alkylierung findet sich nach Stand der Technik in der Literatur Polymer Preprints 2000, 41(1), Seite 735-736.

## Patentansprüche

1. Verfahren zur Alkylierung von vemetzten, N-bzw. Amino-, Ammonium- oder spirobicyclische Ammoniumgruppen haltigen Polymere, **dadurch gekennzeichnet, dass** die durch Polymerisation und Vernetzung erhaltenen, ausgelierten Polymere
a) in Wasser, einem organischen Lösungsmittel oder in einem organischem Lösungsmittetl/Wassergemisch durch Zugabe einer Base gegebenenfalls deprotoniert,
b) die Polymere gegebenenfalls 1 oder mehrmals mit Wasser, einem organischen Lösungsmittel oder einem organischen Lösungsmittel/Wassergemisch gewaschen werden, dann
c) zu der in Wasser, einem organischen Lösungsmittel oder in einem organischen Lösungsmittel/Wassergemisch aufgerührten Gelsuspension ein oder mehrere Alkylatoren bei einer Temperatur zwischen 5 und 160°C bei Normaldruck oder unter erhöhtem Druck zugegeben werden, worauf nach einer Durchmischzeit von 1 bis 60 Minuten, die kontinuierliche Zugabe der Base oder die Zugabe der Base in mehreren Portionen so erfolgt, dass der pH-Wert zwischen 8 und 13,5 liegt, und
d) anschließend die Reprotonierung mittels einer Mineralsäure, gegebenenfalls nach einem oder mehreren Waschschritten, durchgeführt wird,
wodurch die entsprechend alkylierten, vemetzten, N-bzw. Amino-, Ammonium- oder spirobicyclische Ammoniumgruppen haltigen Polymere erhalten werden.

2. Verfahren nach Anspruch 1, **dadurch gekennzeichnet, dass** als N-bzw. Amino-, Ammonium- oder spirobicyclische Ammoniumgruppen haltige Polymere vemetzte, kationische Polymere eingesetzt werden, die primäre, sekundäre oder tertiäre Amingruppen oder Salze davon und/oder quatemäre Ammoniumgruppen und/oder spirobicyclische Ammoniumgruppen, Amidinogruppen, Guanidinogruppen oder Iminogruppen, sowie negativ geladene anorganische und/oder organische Gegenionen aus der Gruppe der Halogenide, Phosphate, Phosphite, Carbonate, Bicarbonate, Sulfate, Bisulfate, Hydroxide, Nitrate, Persulfate, Sulfite und Sulfide, Acetate, Ascorbate, Benzoate, Lactate, Fumarate, Maleate, Pyruvate, Citrate, Dihydrogencitrate, Hydrogencitrate, Propionate, Butyrate, Oxalate, Succinate, Tartrate und Cholate enthalten.

3. Verfahren nach Anspruch 1, **dadurch gekennzeichnet, dass** als Polymere vemetzte Polyvinylamine, Polyallylamine, Polydiallylamine, Polyvinylimidazole, Polydiallylalkylamine oder Polyethylenimine mit geeigneten Gegenionen eingesetzt werden.

4. Verfahren nach Anspruch 1, **dadurch gekennzeichnet, dass** in Schritt a) das gegebenenfalls vorher zerkleinerte bzw. geschnittene Gel bei einer Temperatur von 1 bis 100°C mit Wasser, einem organischen Lösungsmittel aus der Gruppe C₁-C₁₀-Alkohol, Formamid, Dimethylformamid, Tetrahydrofuran, Acetonitril, Dimethylsulfoxyd und Hexamethylphosphorsäuretriamid oder mit einem Gemisch derselben oder mit einem Gemisch mit Wasser und einer zur Deprotonierung geeigneten Base aus der Gruppe NaOH, KOH, LiOH, Ca(OH)₂, NH₄OH, Na₂CO₃ und K₂CO₃, versetzt wird, wobei pro mol Gegenion 0,1 bis 5 mol Base zugesetzt werden.

5. Verfahren nach Anspruch 1, **dadurch gekennzeichnet, dass** in Schritt b) das suspendierte Gel bei einer Temperatur von 1 bis 100°C 1 bis 3 mal mit Wasser oder mit einem organischen Lösungsmittel aus der Gruppe C₁-C₁₀-Alkohol, Formamid, Dimethylformamid, Tetrahydrofuran, Acetonitril, Dimethylsulfoxyd und Hexamethylphosphorsäuretriamid oder mit einem Gemisch derselben oder mit einem Gemisch mit Wasser gewaschen wird.

6. Verfahren nach Anspruch 1, **dadurch gekennzeichnet, dass** in Schritt c) zu der in Wasser, in einem organischen Lösungsmittel aus der Gruppe C₁-C₁₀-Alkohol, Formamid, Dimethylformamid, Tetrahydrofuran, Acetonitril, Dimethylsulfoxyd und Hexamethylphosphorsäuretriamid oder in einem Gemisch derselben oder in einem Gemisch mit Wasser aufgerührten Gelsuspension bei einer Temperatur zwischen 5 und 160°C ein oder mehrere Alkylatoren der Formel RX zugegeben werden, wobei in der Formel RX R einen linearen, verzweigten oder cyclischen Alkylrest mit 1 bis 24 C-Atomen, eine C₁-C₂₀ - Hydroxyalkylgruppe, eine C₇-C₂₀ - Aralkylgruppe, eine C₁-C₂₀ - Alkylammoniumgruppe oder eine C₁-C₂₀ - Alkylamidogruppe und X eine elektrophile Abgangsgruppe aus der Gruppe der Fluorid, Chlorid, Bromid, Jodid, Epoxy, Tosylat, Mesylat oder Triflat bedeutet, wobei der Alkylator dabei eine oder mehrere Abgangsgruppen enthalten kann.

7. Verfahren nach Anspruch 6, **dadurch gekennzeichnet, dass** das suspendierte Gel vor oder nach der Zugabe des Alkylators, je nach verwendetem Lösungsmittel, auf 35 bis 120°C erwärmt wird.

8. Verfahren nach Anspruch 1, **dadurch gekennzeichnet, dass** in Schritt c) als Base, in Abhängigkeit vom eingesetzten Lösungsmittel, NaOH, KOH, NH₄OH, LiOH, Ca(OH)₂, Ba(OH)₂, NaH und NaNH₂ eingesetzt werden.

9. Verfahren nach Anspruch 1, **dadurch gekennzeichnet, dass** im Schritt d) das Gel zuerst in Wasser, dem organischen Lösungsmittel oder dem Lösungsmittel/Wassergemisch für wenige Minuten bis zu mehreren Stunden bei 1 bis 100°C gerührt wird, dann mit jener Menge an Mineralsäuren oder organische Säuren, die zu den ursprünglich im Polymer vorhandenen.Gegenionen und zur teilweisen bis vollständigen Reprotonierung führen, versetzt wird.

10. Verfahren nach Anspruch 1, **dadurch gekennzeichnet, dass** die Reprotonierung gemäß Schritt d) nach einer oder mehrerer Alkohol- und/oder Alkohol/Salz-Wäschen und/oder Wasser- und/oder Wasser/Salz-Wäschen erfolgt.

## Claims

1. A process for the alkylation of crosslinked polymers containing N or amino, ammonium or spirobicyclic ammonium groups, **characterized in that** it comprises optionally deprotonating the gelled polymers obtained by polymerization and crosslinking
a) in water, an organic solvent or in an organic solvent/water mixture by addition of a base,
b) optionally washing the polymers 1 or more times with water, an organic solvent or an organic solvent/water mixture, then
c) adding one or more alkylators at atmospheric or elevated pressure at a temperature of between 5 and 160°C to the gel suspension stirred in water, an organic solvent or in an organic solvent/water mixture, and, after a mixing time, of 1 to 60 minutes adding the base continually or in plural portions in such a way that the pH is between 8 and 13.5, and
d) subsequently carrying out the reprotonation by means of a mineral acid, if appropriate after one or more washing steps,
whereby the correspondingly alkylated, crosslinked polymers containing N or amino, ammonium or spirobicyclic ammonium groups are obtained.

2. The process as claimed in claim 1, **characterized in that** the polymers containing N or amino, ammonium or spirobicyclic ammonium groups are crosslinked, cationic polymers which contain primary, secondary or tertiary amine groups or salts thereof and/or quaternary ammonium groups and/or spirobicyclic ammonium groups, amidino groups, guanidino groups or imino groups, and also negatively charged inorganic and/or organic counterions from the group consisting of halides, phosphates, phosphites, carbonates, bicarbonates, sulphates, bisulphates, hydroxides, nitrates, persulphates, sulphites and sulphides, acetates, ascorbates, benzoates, lactates, fumarates, maleates, pyruvates, citrates, dihydrogencitrates, hydrogencitrates, propionates, butyrates, oxalates, succinates, tartrates and cholates.

3. The process as claimed in claim 1, **characterized in that** the polymers employed are crosslinked polyvinylamines, polyallylamines, polydiallylamines, polyvinylimidazoles, polydiallylalkylamines or polyethylenimines having suitable counterions.

4. The process as claimed in claim 1, **characterized in that** in step a) the optionally previously comminuted or cut gel is treated at a temperature of 1 to 100°C with water, an organic solvent from the group consisting of C₁-C₁₀-alcohol, formamide, dimethylformamide, tetrahydrofuran, acetonitrile, dimethyl sulphoxide and hexamethylphosphoramide or with a mixture thereof or with a mixture with water and a base suitable for deprotonation from the group consisting of NaOH, KOH, LiOH, Ca(OH)₂, NH₄OH, Na₂CO₃ and K₂CO₃, where 0.1 to 5 mol of base are added per mol of counterion.

5. The process as claimed in claim 1, **characterized in that** in step b) the suspended gel is washed 1 to 3 times at a temperature of 1 to 100°C with water or with an organic solvent from the group consisting of C₁-C₁₀-alcohol, formamide, dimethylformamide, tetrahydrofuran, acetonitrile, dimethyl sulphoxide and hexamethylphosphoramide or with a mixture thereof or with a mixture with water.

6. The process as claimed in claim 1, **characterized in that** in step c) one or more alkylators of the formula RX are added at a temperature between 5 and 160°C to the gel suspension stirred in water, in an organic solvent from the group consisting of C₁-C₁₀-alcohol, formamide, dimethylformamide, tetrahydrofuran, acetonitrile, dimethyl sulphoxide and hexamethylphosphoramide or in a mixture thereof or in a mixture with water, where in the formula RX R is a linear, branched or cyclic alkyl radical having 1 to 24 C atoms, a C₁-C₂₀-hydroxyalkyl group, a C₇-C₂₀-aralkyl group, a C₁-C₂₀-alkylammonium group or a C₁-C₂₀-alkylamido group and X is an electrophilic leaving group from the group consisting of fluoride, chloride, bromide, iodide, epoxy, tosylate, mesylate or triflate, it being possible for the alkylator here to contain one or more leaving groups.

7. The process as claimed in claim 6, **characterized in that** the suspended gel is heated to 35 to 120°C before or after the addition of the alkylator, depending on the solvent used.

8. The process as claimed in claim 1, **characterized in that** in step c) the base employed, depending on the solvent employed, is NaOH, KOH, NH₄OH, LiOH, Ca(OH)₂, Ba(OH)₂, NaH and NaNH₂.

9. The process as claimed in claim 1, **characterized in that** in step d) the gel is firstly stirred at 1 to 100°C for a few minutes to a number of hours in water, the organic solvent or the solvent/water mixture, then treated with that amount of mineral acids or organic acids which leads to the counterions originally present in the polymer and to partial to complete reprotonation.

10. The process as claimed in claim 1, **characterized in that** the reprotonation as in step d) is carried out after one or more alcohol and/or alcohol/salt washes and/or water and/or water/salt washes.

## Revendications

1. Procédé d'alkylation de polymères réticulés contenant des groupes d'ammonium spirobicycliques, ou des groupes N, d'ammonium, d'amino, **caractérisé en ce que** les polymères obtenus par la réticulation et polymérisation sont
a) déprotonés dans l'eau, dans un solvant organique ou dans un mélange eau/solvant organique par ajout d'une base, le cas échéant,
b) les polymères sont lavés le cas échéant une fois ou plusieurs fois avec de l'eau, un solvant organique ou un mélange eau/solvant organique, ensuite
c) un ou plusieurs agents alkylants chauffés à une température s'inscrivant entre 5 et 160°C sous pression normale ou sous pression élevée sont ajoutés à une suspension de gel agitée dans l'eau ou dans un solvant organique ou dans un mélange eau/solvant organique, après un temps de mélange de 1 à 60 minutes, l'ajout continu de la base ou l'ajout de la base en plusieurs portions sont réalisés de sorte que la valeur de pH se situe entre 8 et 13,5, et
d) ensuite la reprotonisation au moyen d'un acide minéral, le cas échéant, après une ou plusieurs étapes de lavage est réalisée,
par lequel les polymères réticulés alkylés contenant des groupes d'ammonium spirobicycliques ou de groupes N, d'ammonium ou d'amino correspondants sont obtenus.

2. Procédé selon la revendication 1, **caractérisé en ce qu'**en tant que polymères contenant des groupes d'ammonium spirobicycliques, ou des groupes N, d'ammonium, d'amino on utilise des polymères cationiques réticulés, qui contiennent des groupes d'amine primaire, secondaire ou tertiaire ou des sels de ceux-ci et/ou des groupes d'ammonium quaternaires et/ou des groupes d'ammonium spirobicyclique, des groupes amidino, des groupes guanidino ou des groupes imino, ainsi que des contre-ions organiques et/ou inorganiques chargés négativement choisis dans le groupe des halogénures, des phosphates, des phosphites, des carbonates, des bicarbonates, des sulfates, des bisulfates, des hydroxydes, des nitrates, des persulfates, des sulfites et des sulfures, des acétates, des ascorbates, des benzoates, des lactates, des fumarates, des maléates, des pyruvates, des citrates, des dihydrogénocitrates, des hydrogénocitrates, des propionates, des butyrates, des oxalates, des succinates, des tartrates, des cholates.

3. Procédé selon la revendication 1, **caractérisé en ce que** comme polymère, on utilise des polyvinylamines, des polyallylamines, des polydiallylamines, des polyvinylimidazoles, des polydiallylalkylamines ou des polyéthylènimines réticulées avec des contre-ions appropriés.

4. Procédé selon la revendication 1, **caractérisé en ce que** dans l'étape a) le gel préalablement réduit en poudre ou coupé, est mélangé à une température allant de 1°C à 100°C, avec de l'eau, un solvant organique, choisi dans le groupe de l'alcool en C₁-C₁₀, du formamide, du diméthylformamide, du tétrahydrofurane, de l'acétonitrile, du diméthyl sulfoxyde et du triamide d'acide héxaméthylphosphorique ou avec d'autres mélanges du même type ou un mélange avec de l'eau ou une base appropriée pour la déprotonation choisie parmi le NaOH, le KOH, le LiOH, le Ca(OH)₂, le NH₄OH, le Na₄CO₃, et le K₂CO₃, par mole de contre-ions, environ 0,1 à 5 moles de base étant ajoutées.

5. Procédé selon la revendication 1, **caractérisé en ce que** dans l'étape b) le gel suspendu à une température allant de 1 à 100°C est lavé de 1 à 3 fois avec de l'eau ou un solvant organique, choisi dans le groupe de l'alcool en C₁-C₁₀, du formamide, du diméthylformamide, du tétrahydrofurane, de l'acétonitrile, du diméthyl sulfoxyde et du triamide d'acide héxaméthylphosphorique ou avec d'autres mélanges du même type ou un mélange avec de l'eau.

6. Procédé selon la revendication 1, **caractérisé en ce que** dans l'étape c) on ajoute à la suspension de gel agitée dans l'eau, ou dans un solvant choisi dans le groupe de l'alcool en C₁-C₁₀, du formamide, du diméthylformamide, du tétrahydrofurane, de l'acétonitrile, du diméthyl sulfoxyde et du triamide d'acide héxaméthylphosphorique ou dans d'autres mélanges du même type ou dans un mélange avec de l'eau entre 5 et 160°C un ou plusieurs agents alkylants, de formule RX, dans laquelle R est un résidu alkyle cyclique ou ramifié ou linéaire ayant 1 à 24 atomes de carbone, un groupe hydroxyalkyle en C₁-C₂₀, un groupe aralkyle en C₇-C₂₀, un groupe alkylammonium en C₁-C₂₀, ou un groupe alkylamido de C₁-C₂₀, et X est un groupe de départ électrophile, choisi dans le groupe du fluorure, du chlorure, du bromure, de l'iodure, de l'époxy, du tosylate, du mésylate ou du triflate, l'agent alkylant pouvant, par conséquent, contenir un ou plusieurs groupes de départ.

7. Procédé selon la revendication 6, **caractérisé en ce que** le gel suspendu est chauffé avant ou après l'ajout d'agents alkylants en fonction du solvant utilisé, de 35 à 120°C.

8. Procédé selon la revendication 1, **caractérisé en ce que** dans l'étape c), on utilise comme base, en fonction du solvant utilisé, NaOH, KOH, NH₄OH, LiOH, Ca(OH)₂, Ba(OH)₂, NaH et NaNH₂.

9. Procédé selon la revendication 1, **caractérisé en ce que** dans l'étape d) on agite dans un premier temps le gel dans l'eau, le solvant organique ou le mélange de solvant/eau de quelques minutes à plusieurs heures de 1 à 100°C puis on le mélange avec toute quantité d'acides minéraux ou d'acides organiques, qui conduisent aux contre-ions existant à l'origine dans le polymère et à la reprotonation partielle voire complète.

10. Procédé selon la revendication 1, **caractérisé en ce que** la reprotonation selon l'étape d) se produit après un ou plusieurs lavages à l'alcool et/ou à l'alcool/sel et/ou lavages à l'eau et/ou à l'eau/sel.
